# EUROPÄISCHE PATENTANMELDUNG

(11) **EP 2 848 913 A1**
(43) Veröffentlichungstag der Anmeldung: **18.03.2015**
(21) Anmeldenummer: 13184047.2
(22) Anmeldetag: 12.09.2013
(51) Int. Cl.: G01N 15/02, G01N 21/53, G08B 17/107

(54) **Detektionsgerät zur Feinstaubbestimmung**

(71) Anmelder: Siemens Schweiz AG, 8047 Zürich (CH)
(72) Erfinder: Fischer, Martin, 8180 Bülach (CH)
(74) Vertreter: Maier, Daniel Oliver

(57) **Zusammenfassung**

Ein nach dem Streulichtprinzip arbeitendes optisches Detektionsgerät zur messtechnischen Bestimmung von Feinstaubpartikeln, wobei das Detektionsgerät auch als Rauchmelder, insbesondere als Ansaugrauchmelder, einsetzbar ist. Somit ist in kompakter Bauweise ein Dual-use Detektionsgerät bereitgestellt, zur Rauchdetektion und zur Feinstaubdetektion. Die kompakte Bauweise ermöglicht die Herstellung des Detektionsgerätes in Form und Abmessungen von handelsüblichen Gefahrenmeldern und somit eine Verwendung insbesondere in Privathaushalten. Z.B. für eine zuverlässige und kostengünstige Überwachung von Holzfeuerungen (Kamin etc.).

## Beschreibung

Die Erfindung betrifft ein nach dem Streulichtprinzip arbeitendes optisches Detektionsgerät zur messtechnischen Bestimmung von Feinstaubpartikel, sowie die Verwendung des Detektionsgerätes als kombinierten Rauch-/Feinstaubmelder.

Die Menge und die Konzentration von Feinstaub in der Luft sind wichtige Faktoren bei der Bestimmung der Luftqualität. Die Feinstaubbelastung in der Luft wird insbesondere bestimmt durch Abgase von Verbrennungsmotoren im Strassenverkehr und durch die Emissionen von Heizungsanlagen. Die Verbrennung von Festbrennstoffen wie Holzscheite oder Holzpellets führt dabei zu einer höheren Feinstaubemission als die Verbrennung flüssiger oder gasförmiger Brennstoffe, wie Erdöl bzw. Erdgas.

Eine besondere Bedeutung bei der Bestimmung der Feinstaubbelastung wird der wird der Partikelgrösse zugewiesen. Dabei gilt, dass die Gefährlichkeit von Feinstaubpartikel für den Menschen umso höher ist, je kleiner die Partikel sind.

Der sogenannte PM-Standard (Particulate Matter) stellt eine allgemein anerkannte Kategorisierung für die Feinstaub-partikelgrösse dar. Hat ein Feinstaubpartikel einen aerodynamischen Durchmesser von 10 oder weniger Mikrometern (µm), fällt der Partikel in die Kategorie PM10.

Die Bestimmung der Grösse von Feinstaubpartikeln kann z.B. durch die Beaufschlagung von entsprechenden Filtern oder durch Wägung erfolgen. Diese Methoden sind aber wartungsintensiv bzw. neigen zu Ungenauigkeiten.

Weiterhin sind zur Bestimmung der Grösse von Feinstaubpartikeln optische Feinstaubmessgeräte bekannt. Diese umfassen üblicherweise eine Druckpumpe um Gas anzusaugen, einen Laser und einen empfindlichen, schnellen Photodetektor. Dabei wird das Gas durch eine Verengung gedrückt so dass dort nur wenige Partikel pro Zeitraum vorhanden sind. Der Photodetektor zählt dann die empfangenen Lichtpulse und kann über den Ausschlag eine Aussage über die Partikelgrösse machen. Dies erfordert eine aufwendige, entsprechend teure Elektronik und auch eine aufwendige Wartung, da leicht Verstopfungen in der Gaszuleitung auftreten können.

In der Schweizer Patentschrift CH695710A5 sind ein Verfahren und eine Einrichtung zur optischen Konzentrationsmessung von Feinstaub in einem Medium offenbart. Die offenbarte Einrichtung benötigt definiert polarisiertes Licht, eine permanente Kalibrierung und eine aufwendige mechanische Anordnung der Messmittel.

Es ist daher die Aufgabe der vorliegenden Erfindung, ein Detektionsgerät zur zuverlässigen und kostengünstigen Bestimmung von Feinstaubpartikel bereitzustellen.

Die Aufgabe wird gelöst durch ein nach dem Streulichtprinzip arbeitendes optisches Detektionsgerät zur messtechnischen Bestimmung von Feinstaubpartikel, wobei das Detektionsgerät umfasst:
- eine gegen Fremdlichteintritt geschützte optische Messkammer, wobei die Messkammer ausgestaltet ist, um Umweltluft mit Feinstaubpartikeln aus der Umgebung des Detektionsgerätes aufzunehmen;
- eine erste Lichtquelle zum Aussenden von Licht in einem ersten Wellenlängenbereich;
- eine für den ersten Wellenlängenbereich sensitive optische Empfangseinheit zum Empfang des an den Feinstaubpartikeln gestreuten Lichts und zum Umwandeln des empfangenen Lichts in ein erstes Streulichtsignal; und
- ein Auswertemittel, welches über den zeitlichen Verlauf und der Amplitudenhöhe des ersten Streulichtsignals Störgrössen (z.B. Rauch, Staub) von Feinstaub diskriminiert.

Dass die optische Messkammer gegen Fremdlichteintritt geschützt ist, kann durch die Verwendung einer lichtdichten Messkammer gewährt sein. Es ist aber auch möglich, Fremdlicht durch Modulation der Signalquellen zu unterdrücken. Durch die Analyse des zeitlichen Verlaufs des Streulichtsignals ist eine Diskriminierung zwischen Rauch und Feinstaub möglich. Feinstaubkonzentrationen sind typischerweise im Bereich <0.05%/m und langsam ändernd (mehrere Stunden) während Rauch/Staub vorwiegend im Bereich ab 1%/m wahrgenommen wird und sich vergleichsweise schnell ändert (<30min). Die Variation der Feinstaubkonzentration ist also über die Analyse der langfristigen, aber kleinen Signalschwankung ersichtlich. Mit Vorteil erfolgt die Zuführung der Umweltluft z.B. durch einen Sogmechanismus (z.B. durch einen Ventilator im Gefahrenmelder) oder durch einen Lufteinblasmechanismus.

Eine erste vorteilhafte Ausgestaltung der Erfindung liegt darin, dass das Detektionsgerätes eine zweite Lichtquelle zum Aussenden von Licht in einem zweiten Wellenlängenbereich umfasst; wobei die optische Empfangseinheit derart ausgestaltet ist, dass sie auch für den zweiten Wellenlängenbereich empfindlich ist und das empfangene Licht in ein zweites Streulichtsignal umwandelt, und wobei das Auswertemittel dazu eingerichtet ist, durch Vergleich der Streulichtsignale eine Klassifizierung in eine oder mehrere Feinstaubpartikelgrössenklassen vorzunehmen. Durch das Vorhandensein eines zweiten Streulichtsignals aus einem zweiten Wellenlängenbereich ist es möglich durch Amplitudenvergleich der Streulichtsignale die Partikelgrösse zu bestimmen.

Die Partikelgrösse kann nun verwendet werden um das Signal in Feinstaubpartikelklassen einzuteilen (z.B. PM10, PM2.5, PM0.1). Es ist bekannt, dass insbesondere die Grösse der Feinstaubpartikel in der Luft entscheidend für ihre Gefährlichkeit für den menschlichen Organismus (z.B. für Lunge, Herzkreislauf, Gehirn) ist. Je kleiner die Feinstaubpartikel sind, desto gefährlicher sind sie für einen Menschen, denn kleine Feinstaubpartikel gelangen leichter in den menschlichen Körper. Nach der PM-Kategorisierung (Particulate Matter) werden der Kategorie PM10 Feinstaubpartikel zugeordnet, deren aerodynamischer Durchmesser 10 µm oder weniger beträgt. Feinstaubpartikel der Kategorie PM10 (Partikelgrösse < 10 µm) können in Luftröhre und Bronchien gelangen. Feinstaubpartikel der Kategorie PM2.5 (Partikelgrösse < 2,5 µm) können in die Lunge bzw. die Lungenbläschen gelangen. Feinstaubpartikel der Kategorie PM0.1 (Partikelgrösse < 0,1 µm) können in die Blutbahn gelangen.

Durch die Bestimmung der grössenselektiven Konzentration gewichtet nach der Partikelgrösse lässt sich sehr leicht ein Mass und eine Aussage zur potentiellen Gefährlichkeit von in der Luft befindlichen Feinstaubpartikeln ableiten, insbesondere in einem Wohnraum, aber auch am Arbeitsplatz. Es ist weiterhin möglich das erfindungsgemässe Detektionsgerät auch als PM10-Messgerät im Sinne der Norm EN 12341 (Ermittlung der PM10-Fraktion von Schwebstaub) zu verwenden.

Eine weitere vorteilhafte Ausgestaltung der Erfindung liegt darin, dass die Klassifizierung gemäss einer nach physiologischen Gesichtspunkten bewerteten Gewichtungsfunktion erfolgt, die das grössenselektive Absorptionsverhalten von Feinstaubpartikeln in den oberen Atemwegen beim menschlichen Körper nachbildet. Die oberen Atemwege (Mund, Nase) sind entscheidend für die Aufnahme von Feinstaubpartikel im menschlichen Körper. Je weniger Partikel absorbiert, d.h. je mehr Partikel abgeschieden werden können, umso besser. Die Gewichtungsfunktion bzw. Trennfunktion berücksichtigt z.B. dass sehr kleine Partikel zu 100 % absorbiert werden. Die Absorptionsrate nimmt mit zunehmender Partikelgrösse ab und grosse Partikel (ab 15 µm) werden überhaupt nicht mehr absorbiert, d.h. hier ist die Absorptionsrate Null. Je genauer durch die Gewichtungsfunktion das menschlich physiologische Absorptionsverhalten der oberen Atemwege nachgebildet wird, desto genauer ist die Bestimmung der Gefährlichkeit des vorhandenen Feinstaubs.

Oftmals wird für die Messung der Feinstaubdetektion der Standard "PM10" herbeigezogen. In der EU ist dieser Standard seit 2005 gültig. Der PM10 Wert ist allerdings keine scharfe Grenze des aerodynamischen Durchmessers der Teilchen. Vielmehr wurde versucht das Abscheideverhalten der oberen Atemwege nachzubilden. Deshalb werden für den PM10 Wert alle Partikel <1µm einbezogen, die grösseren Partikel (1-10µm) aber nur zu einem bestimmten Prozentanteil, der dann bei 15µm 0% erreicht. Die Mittelung dieser Gewichtungsfunktion entspricht dann ca.10 µm. Eine Verschärfung wurde mit dem "PM2.5" Standard eingeführt, welche alle lungengängigen Partikel mit einbezieht. Eine nochmals verschärfte Version des Standards befasst sich mit Teilchen welche <0.1 µm klein sind. Im Allgemeinen ist anerkannt, dass je kleiner die Teilchen sind, desto schädlicher ist ihr Einfluss auf den menschlichen Organismus.

Eine weitere vorteilhafte Ausgestaltung der Erfindung liegt darin, dass die Gewichtung bzw. die Gewichtungsfunktion auf einem geeigneten Standard (PM10, PM2.5, PM0.1) oder einer geeigneten Normung basiert. Dadurch können behördliche Anforderungen, die auf dem entsprechenden Standard oder der jeweiligen Norm beruhen bei der Bestimmung des Feinstaubs berücksichtigt werden. Weiterhin ist es möglich das erfindungsgemässe Detektionsgerät als Referenzgerät für die Norm zu verwenden oder mit ihm entsprechende Referenzmessungen vorzunehmen.

Eine weitere vorteilhafte Ausgestaltung der Erfindung liegt darin, dass, insbesondere fortlaufend, bestimmte Konzentrationswerte der jeweiligen bewerteten Feinstaubpartikelgrössenklasse (PM10, PM2.5, PM0.1) ausgegeben werden und/oder eine Meldung ausgegeben wird, falls einer der Konzentrationswerte einen jeweiligen Grenzwert überschreitet. In den Auswertemitteln (z.B. Mikrocontroller) können für jede Feinstaubpartikelgrössenklasse (PM10 "coarse particles"; PM2.5 "fine particles"; PM0.1 "ultra-fine particles") jeweils entsprechende Grenzwerte für ihre Konzentration festgelegt werden. Diese Grenzwerte können gemäss vorgegebener Anforderungen entsprechend definiert sein. So können für Kinder oder kranke Menschen (z.B. Asthmatiker) niedrigere Grenzwerte angemessen sein als für gesunde Erwachsene. Durch die fortlaufende Ausgabe der Konzentrationswerte können diese permanent und online protokolliert werden. Bei Erreichen eines Grenzwertes wird sofort eine Meldung oder ein Signal ausgegeben. Dies erfolgt am Ort der Messung und/oder in einer Leitstelle (z.B. Gebäudeleitstelle).

Eine weitere vorteilhafte Ausgestaltung der Erfindung liegt darin, dass die messtechnische Klassifizierung der Feinstaubpartikelgrössen in der optischen Messkammer auf Basis des Amplitudenverhältnisses des ersten und zweiten Streulichtsignals erfolgt. Amplitudenverhältnisse können leicht gebildet und miteinander verglichen werden, z.B. durch entsprechende Komparatoren oder Dividierer. Dadurch lässt sich auch der Einfluss von Störgrössen unterdrücken.

Eine weitere vorteilhafte Ausgestaltung der Erfindung liegt darin, dass die beiden Streulichtsignale zuvor derart zueinander normiert werden, dass deren Amplitudenverlauf für eine vorgegebene Partikelgrösse, insbesondere Feinstaub-Partikelgrösse, in etwa übereinstimmt. Dadurch dass der Amplitudenverlauf der beiden Streulichtsignale für einen bestimmten frei wählbaren Umwelt-Partikel in etwa übereinstimmt, erfolgt eine Kalibrierung. Diese Kalibrierung erfolgt vorzugsweise bei der Inbetriebnahme des Gefahrenmelders und wird gegebenenfalls zyklisch wiederholt. Dadurch dass die Normierung bzw. Kalibrierung auf Basis einer Feinstaub-Partikelgrösse erfolgt, werden insbesondere die entsprechenden Feinstaubpartikel zuverlässig erkannt.

Eine weitere vorteilhafte Ausgestaltung der Erfindung liegt darin, dass die vorgegebene Partikelgrösse für die Normierung der beiden Streulichtsignale in etwa einer der Feinstaubpartikelgrössenklassen PM10, PM2.5 oder PM0.1 entspricht. Dadurch, dass die beiden Streulichtsignale in der Weise zueinander normiert werden, dass deren Amplitudenverlauf für Partikel einer der Feinstaubpartikelgrössenklasse PM10 oder PM2.5 oder PM0.1 in etwa übereinstimmt, können für die Messung von Partikeln aus der jeweiligen Feinstaubpartikelgrössenklasse besonders genaue Messergebnisse erzielt werden.

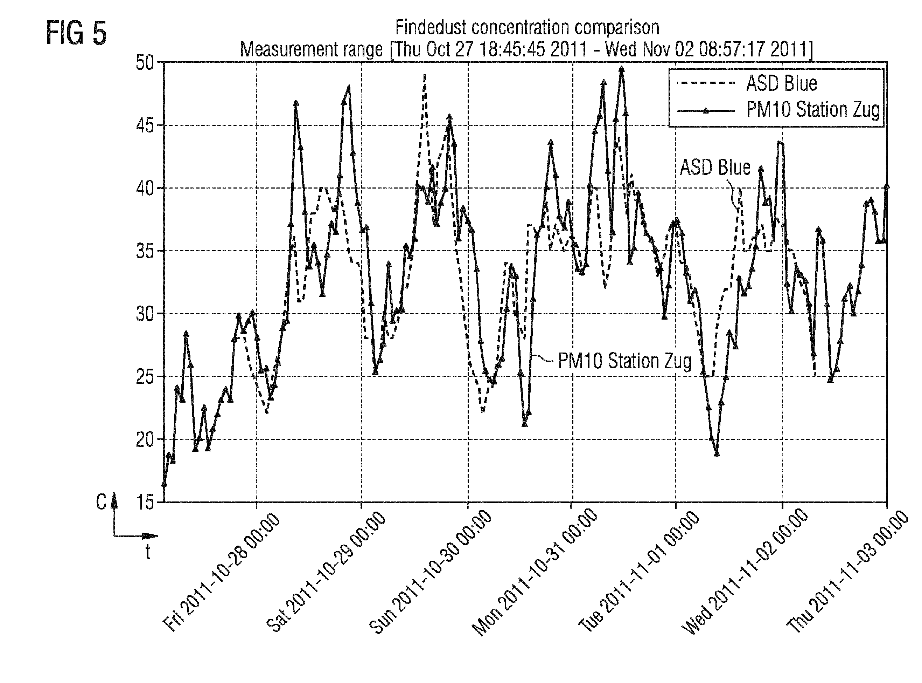

Eine weitere vorteilhafte Ausgestaltung der Erfindung liegt darin, dass die erste Lichtquelle Licht im ersten Wellenlängenbereich von 400 nm bis 500 nm aussendet. Bei der Verwendung einer einzigen Lichtquelle im Detektionsgerät, kann über den zeitlichen Verlauf und die Amplitudenhöhe Rauch von Feinstaub diskriminiert werden. "Speziell Rauch kann man mit einer Lichtquelle normalerweise nicht von Feinstaub diskriminieren. Deshalb stellen Rauchpartikel eine Störgrösse dar. Wird aber (wie z.B. in FIG5 ersichtlich) eine Analyse der langfristigen Schwankungen gemacht kann anhand der Amplitudenhöhe und des zeitlichen Verlaufs Rauch von Feinstaub diskriminiert werden. Rauch würde in diesem Diagramm (Figur 5) sehr steil ansteigen und üblicherweise einen Amplitudenhöhe von 100x der geplotteten Höhe erreichen. Sendet die Lichtquelle Licht in einem Wellenlängenbereich von 430 nm bis 500 nm aus, d.h. blaues Licht, dann wird besonders viel Licht an den gesundheitsgefährdenden 0.1µm Partikeln gestreut und ist deshalb als Gesundheitsindikator / Umweltindikator besonders geeignet.

Eine weitere vorteilhafte Ausgestaltung der Erfindung liegt darin, dass die erste Lichtquelle Licht im ersten Wellenlängenbereich von 400 nm bis 500 nm, insbesondere mit einer Wellenlänge von 470 nm ± 20 nm aussendet, und wobei die zweite Lichtquelle Licht im zweiten Wellenlängenbereich von 600 nm bis 1000 nm, insbesondere mit einer Wellenlänge von 940 nm + 20 nm, aussendet. Aus der Kombination eines kurzwelligen Emitters mit einer Photodiode welche im Blau Bereich empfindlich ist, kann die Empfindlichkeit für Partikel <1 µm drastisch gesteigert werden als dies mit einer normalen IR-Photodiode der Fall wäre.

Durch die Kombination eines blauen Emitters und einer entsprechend empfindlichen Photodiode kann ein besonders gesundheitsgefährdendes Spektrum der Feinstaubbelastung gemessen werden, nämlich diejenigen Partikel, welche < 1µm sind. Der Grund liegt darin, dass die Streueffizienz der kurzwelligen, blauen LED bei Raleigh Streuung um die vierte Potenz effizienter ist als die der langwelligen, IR-LED. Der Peak der Streueffizienz liegt bei der Wellenlange selbst, also z.B. bei 470nm. Das empfangene Streusignal gewichtet also per Definition die Teilchen um 500nm am höchsten - dies ist insbesondere für die Abschätzung der Toxizität entscheidend.

Eine weitere vorteilhafte Ausgestaltung der Erfindung liegt darin, dass die erste und zweite Lichtquelle (3, 4) durch eine gemeinsame Lichtquelle ausgebildet sind, geeignet zum Aussenden von Licht in einem ersten Wellenlängenbereich und in einem zweiten Wellenlängenbereich. Das Licht kann z.B. von einer einzigen Lichtquelle stammen, die zeitlich abwechselnd infrarotes Licht und blaues Licht aussendet. Es kann auch von zwei separaten Lichtquellen stammen, insbesondere von einer blauen Leuchtdiode und von einer Infrarot-Leuchtdiode. Besonders vorteilhaft ist dabei die Verwendung einer IR-Leuchtdiode mit einer Wellenlange bei 900 nm ± 60 nm sowie einer blauen Leuchtdiode mit einer Wellenlange 470 nm ± 20 nm.

Eine weitere vorteilhafte Ausgestaltung der Erfindung liegt darin, dass die optische Achse der optischen Empfangseinheit jeweils um denselben Winkel zur jeweiligen optischen Achse der ersten Lichtquelle und der zweiten Lichtquelle gedreht angeordnet ist, wobei die durch eine Bestrahlung der Feinstaubpartikel mit dem kurzwelligen bzw. langwelligen Licht jeweils resultierenden ersten bzw. zweiten Streulichtsignale in einem Schaltungsträger der optischen Empfangseinheit durch Amplitudenvergleich ausgewertet werden. Somit sind die optischen Achsen der Lichtquellen auf ein gemeinsames optisches Streuzentrum in der Messkammer ausgerichtet. Dies erhöht die Messgenauigkeit des Melders.

Eine weitere vorteilhafte Ausgestaltung der Erfindung liegt darin, dass die der Messkammer zugeführte Umweltluft auf darin befindliche Staubpartikel mit einer Partikelgrösse von mehr als 15 µm, insbesondere von mehr als 50 µm, vorgefiltert wird. Partikel mit einer Grösse von mehr als 15 µm werden nicht von den oberen Atemwegen absorbiert und gelangen somit nicht in den menschlichen Körper. Wenn Partikel mit einer Grösse von mehr als 15 µm in die Messkammer gelangen, würden sie nur eine Störgrösse darstellen (z.B. Messungenauigkeiten durch Verschmutzung). Für die Ausfilterung dieser grossen Partikel kann z.B. ein Sammelfilter (z.B. Quarzfilter) oder ein entsprechendes Sieb verwendet werden. Auch ein Filter basierend auf elektrostatischer Abscheidung (Aufladung der Partikel mittels Hochspannung) ist einsetzbar.

Eine weitere vorteilhafte Ausgestaltung der Erfindung liegt darin, dass das Detektionsgerät zur Überwachung von kleinen und mittleren Feuerungsanlagen, insbesondere von in Privathaushalten weit verbreiteten Holzfeuerungsanlagen, verwendbar ist. Bei der Verbrennung von Holz kann bis zu tausendfach mehr Giftgas und Feinstaub freigesetzt werden als bei der Verbrennung von Öl oder Gas. Insbesondere Feinstaub aus Holzverbrennung gefährdet nicht nur die Atemwege, die Lunge und das Herz-Kreislaufsystem, sondern auch Nervensystem und Gehirn. Je besser der Verbrennungsprozess erfolgt, desto mehr ultrafeine Feinstaubpartikel (Kategorie PM0.1) entstehen, die in Lungenbläschen und sogar in die Blutbahn gelangen können. Diese Gefahr wird insbesondere in Privathaushalten oft unterschätzt. Insbesondere in Privathaushalten kann das erfindungsgemässe Detektionsgerät deshalb vorteilhaft und kostengünstig eingesetzt werden.

Eine weitere vorteilhafte Ausgestaltung der Erfindung liegt darin, dass das Detektionsgerät zur Überwachung der Luftqualität in Umweltmessstationen verwendbar ist. Das erfindungsgemässe Detektionsgerät kann somit auch in Umweltmessstationen (z.B. an Strassen oder öffentlichen Plätzen) kostengünstig eingesetzt werden.

Insbesondere ist es von Vorteil, dass das erfindungsgemässe Detektionsgerät in seinen räumlichen Abmessungen in etwa einem Gefahrenmelder für den Privatbereich (residential) entspricht.

Eine weitere vorteilhafte Ausgestaltung der Erfindung liegt darin, dass das Detektionsgerät auch als Rauchmelder, insbesondere als Ansaugrauchmelder, einsetzbar ist. Das erfindungsgemässe Detektionsgerät kann daher im "dual use"-Betrieb gleichzeitig sowohl als Brandmelder (konventioneller Gefahrenmelder) als auch als Feinstaubmelder eingesetzt werden. Dies bringt Kostenvorteile in der Anschaffung und in der Installation. Die erfindungsgemässen Feinstaubmessgeräte können im stand-alone-Betrieb, aber auch vernetzt z.B. in einem Gebäudemanagement- bzw. Umweltmanagementsystem verwendet werden.

Eine weitere vorteilhafte Ausgestaltung der Erfindung liegt Verwendung des erfindungsgemässen Detektionsgerätes als kombinierten Rauch-/Feinstaubmelder, wobei in Abhängigkeit der Rauchkonzentration ein Feueralarm und in Abhängigkeit der Feinstaubkonzentration eine Feinstaubwarnung ausgegeben wird. Das erfindungsgemässe Detektionsgerät ermöglicht u.a. den Aufbau und das Design für einen kostengünstigen und trotzdem sehr empfindlichen Feinstaubdetektors. Vorzugsweise kann der Aufbau kombiniert werden mit Rauchmeldern, insbesondere Ansaugrauchmeldern ("Aspirating Smoke Detektors", ASD), was den Mehrwert und den Einsatzzweck solcher Geräte erhöht. Die Messmethode bezieht sich insbesondere auf Partikel < 1µm, welche für die Gesundheit besonders schädlich sind. Prinzipiell kann die Erfindung auch für punktförmige Rauchmelder (mit entsprechender Messkammer) verwendet bzw. mit einem punktförmigen Rauchmelder integriert werden.

Die Erfindung sowie vorteilhafte Ausführungen der vorliegenden Erfindung werden am Beispiel der nachfolgenden Figuren erläutert. Dabei zeigen:
- FIG 1: einen schematischen Längsschnitt durch ein Gehäuse eines ersten beispielhaft skizzierten optischen Detektionsgerätes zur messtechnischen Bestimmung von Feinstaubpartikel,
- FIG 2: einen schematischen Längsschnitt durch ein Gehäuse eines zweiten beispielhaft skizzierten optischen Detektionsgerätes zur messtechnischen Bestimmung von Feinstaubpartikel,
- FIG 3: jeweils den relativen Signalpegel eines Amplitudenverlaufs von beispielhaft infrarotem und blauem Streulicht, logarithmisch aufgetragen in µm und mit eingezeichneter durchschnittlicher Partikelgrösse von typischen Rauch- bzw. Feinstaubpartikeln,
- FIG 4: eine nach physiologischen Gesichtspunkten erstellte beispielshafte Gewichtungs- bzw. Trennungsfunktion die das grössenselektive Absorptionsverhalten von Feinstaubpartikeln in den oberen Atemwegen des menschlichen Körpers nachbildet, und
- FIG 5: ein Diagramm mit der Darstellung einer beispielhaften Feinstaubmessung über mehrere Tage.

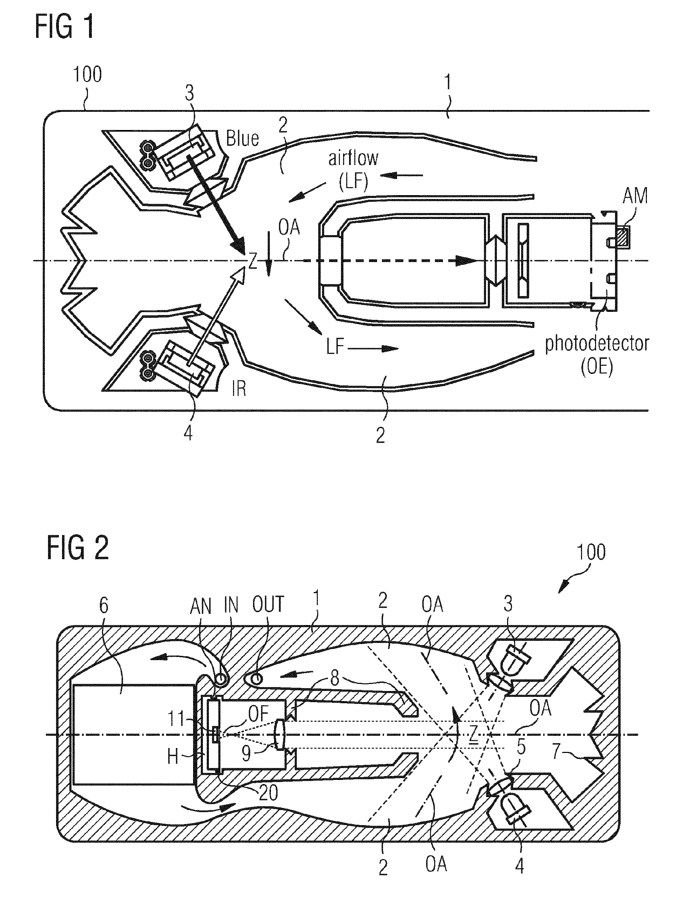

Figur 1 zeigt einen schematischen Längsschnitt durch ein Gehäuse eines ersten beispielhaft skizzierten optischen Detektionsgerätes 100 zur messtechnischen Bestimmung von Feinstaubpartikel. Die zu analysierende Umgebungsluft LF wird durch geeignete Luftzufuhr- und Luftauslassmechanismen der Messkammer 2 zugeführt und aus der Messkammer 2 wieder abtransportiert. Der Luftfluss LF (airflow) ist durch eine Aneinanderreihung von Pfeilen in der Messkammer 2 schematisch dargestellt. Die Umgebungsluft kann z.B. von Aussen in die Messkammer 2 des Detektionsgerätes 100 eingeblasen werden oder durch einen Mechanismus innerhalb der Messkammer 2 eingesaugt werden (z.B. durch einen Ventilationsmechanismus).

Mit Vorteil ist das Detektionsgerät 100 wie bei einem Ansaugrauchmelder (Aspirating Smoke Detector) zur Zuführung der Umgebungsluft ausgebildet. Mit Vorteil ist die Messkammer 2 als Strömungskanal für angesaugte Umgebungsluft LF ausgebildet.

Mit Vorteil ist das Detektionsgerät 100 mit einem Rauchmelder, insbesondere einem Ansaugrauchmelder, in einem gemeinsamen Gehäuse 1 kombiniert untergebracht bzw. integriert. Dies ermöglicht u.a. einen Dual-use-Betrieb (Feinstaubmelder plus Rauchmelder) eines einzigen Gerätes.

Mit Vorteil verwenden das Detektionsgerät 100 und der Rauchmelder dieselben Bauteile (wie z.B. optische Messkammer, Lichtquellen, optische Empfangseinheit, Auswertemittel) zur Bestimmung von Feinstaub bzw. zur Bestimmung von Rauch. Dies ermöglicht u.a. Kostenvorteile bei der Herstellung der Melder.

Das Detektionsgerät 100 gemäss Figur 1 weist zwei Lichtquellen 3, 4 zum Aussenden von Licht in einem ersten und zweiten Wellenlängenbereich auf. Prinzipiell könnte auch eine einzige Lichtquelle zum Aussenden von Licht in einem ersten und zweiten Wellenlängenbereich verwendet werden. In der Darstellung gemäss Figur 1 gibt die erste Lichtquelle 3 Licht in einem ersten Wellenlängenbereich und die zweite Lichtquelle 4 Licht in einem zweiten Wellenlängenbereich ab. In der Darstellung gemäss Figur 1 sendet die erste Lichtquelle 3 vorzugsweise kurzwelliges, z.B. blaues Licht (Blue), wie z.B. um 470 nm ab und die zweite Lichtquelle 4 vorzugsweise langwelliges, z.B. Infrarotlicht (IR), wie z.B. um 940 nm ab.

Das jeweilige Licht wird dann an Luftpartikeln, die sich in etwa im Streuzentrum Z befinden, gestreut. Ein Teil des jeweiligen gestreuten Lichts gelangt schliesslich zur optischen Empfangseinheit OE (z.B. Photosensor, Photodiode, Photodiode in Reverse-Gullwing-Bauweise). Dort wird es detektiert und als Ausgangssignal zur Weiterverarbeitung ausgegeben. Auf Basis einer zeitlichen Auswertung für das "infrarote" und "blaue" Ausgangssignal ist dann eine Diskriminierung der detektierten Partikelgrösse und eine entsprechende Generierung z.B. eines Brandalarms oder einer Feinstaubwarnung möglich.

Das Auswerten von Streulichtsignalen bei einem optischen Gefahrenmelder ist z.B. in der internationalen Patentanmeldung WO 2012/019987 A2 beschrieben.

Mit Vorteil enthält eine Feinstaubwarnung des Detektionsgerätes 100 eine grössenselektiven Kategorisierung der Konzentration der entdeckten Feinstaubpartikel (PM10, PM2,5, PM0,5 usw.).

Die optische Empfangseinheit OE ist sensitiv zum Empfang des an den Feinstaubpartikeln gestreuten Lichts des ersten und zweiten Wellenlängenbereichs. In der Empfangseinheit OE wird das jeweilige empfangene Licht in ein erstes und zweites Streulichtsignal umgewandelt und an das Auswertemittel AM (z.B. Mikroprozessor, Controller), welche u.a. eine grössenselektive Bestimmung der Konzentration der Feinstaubpartikel auf Basis der beiden Streulichtsignale vornimmt, weitergeleitet.

Die optische Messkammer 2 ist gegen Fremdlichteintritt geschützt, damit keine Messungenauigkeiten entstehen. Der Schutz gegen Fremdlichteintritt kann z.B. durch eine lichtdicht ausgeführte optische Messkammer 2 sichergestellt werden. Der Fremdlichteintritt kann aber auch durch entsprechende Modulation der Lichtquellen 3, 4 unterdrückt werden.

Die Lichtquellen (Emitter) 3, 4 werden mit Vorteil durch LEDs gebildet. Mit Vorteil sind die optische Achse der optischen Empfangseinheit OE und die optische Achse der zumindest einen Lichtquelle auf ein gemeinsames optisches Streuzentrum in der Messkammer 2 ausgerichtet. Mit Vorteil liegt das Streulichtvolumen in der Messkammer 2 in einem Bereich von grösser 0,1 cm³, insbesondere in einem Bereich von 1 bis 5 cm³.

Mit Vorteil ist die Messkammer 2 optisch hermetisch dicht ausgebildet.

Das erfindungsgemässe Detektionsgerät 100 ermöglicht insbesondere eine einfache Indikation, ob Feinstaub vorliegt, zumindest vergleichbar mit den Ergebnissen einer amtlichen/offiziellen Feinstaubmessstation.

Figur 2 zeigt einen schematischen Längsschnitt durch ein Gehäuse eines zweiten beispielhaft skizzierten optischen Detektionsgerätes 100 zur messtechnischen Bestimmung von Feinstaubpartikel. Weiterhin ist das Detektionsgerätes 100 auch zur Detektion von Rauchpartikel geeignet.

Das Detektionsgerät 100 gemäss Figur 2 stellt somit sowohl einen Rauchmelder als auch einen Feinstaubmelder dar ("dual use"). Beim Detektionsgerät 100 gemäss Figur 2 handelt es sich beispielhafterweise um einen optischen Ansaugrauchmelder, geeignet zur Detektion von Feinstaub- und Rauchpartikel. Der dargestellte optische Detektionsgerät 100 arbeitet nach dem Streulichtprinzip. Er weist eine als Strömungskanal für angesaugte Umgebungsluft ausgebildete Messkammer 2, zwei LED 3, 4 als Lichtquellen und eine optische Empfangseinheit OE (z.B. Photodiode) auf. Die optische Empfangseinheit OE und die beiden LED 3, 4 sind auf ein gemeinsames optisches Streuzentrum Z in der Messkammer 2 ausgerichtet. Die optische Achse OA der optischen Empfangseinheit OE ist dabei um einen Winkel von etwa 120° zur jeweiligen optischen Achse OA der beiden LED 3, 4 gedreht angeordnet. Der gezeigte Ansaugrauchmelder 100 weist somit zwei Streulichtanordnungen mit zwei Vorwärtsstreuwinkeln von etwa 120° auf. Im vorliegenden Beispiel senden die beiden LED 3, 4 abwechselnd Licht aus. Es sendet eine der beiden LED 4 vorzugsweise Licht im Infrarotbereich, wie z.B. um 900 nm, und die andere LED 3 vorzugsweise blaues Licht, wie z.B. um 470 nm, aus. Das jeweilige Licht wird an den Luftpartikeln, die sich im Streuzentrum Z befinden, gestreut. Ein Teil des jeweiligen gestreuten Lichts gelangt schliesslich zur optischen Empfangseinheit OE. Dort wird es detektiert und als Ausgangssignal zur Weiterverarbeitung an entsprechende Auswertemittel AM ausgegeben. Auf Basis des zeitlichen Verlaufs und der Amplitudenhöhe der Streusignale für das "infrarote" und das "blaue" Ausgangssignal ist dann eine Diskriminierung der detektierten Partikel und eine entsprechende Generierung z.B. eines Brandalarms oder einer Feinstaubwarnung möglich.

Mit IN ist der Lufteintritt und mit OUT der Luftaustritt im Strömungskanal (Messkammer) 2 bezeichnet. Mit dem Bezugzeichen 7 ist eine Lichtfalle, mit den Bezugszeichen 8 Blenden und mit 9 eine optische Linse zur Fokussierung des Streulichts auf einen Photosensor der optischen Empfangseinheit OE bezeichnet. Mit OF ist ferner eine Durchgangsöffnung in der optischen Empfangseinheit OE bezeichnet, durch die das Streulicht zum Photosensor gelangen kann. Mit den Bezugszeichen 5 sind optische Linsen zur Fokussierung des emittierten Lichts der LEDs 3, 4 bezeichnet.

Mit Vorteil ist der Querschnitt der Durchgangsöffnung OF in Form und Abmessung auf den Querschnitt der photosensitiven Schicht der optischen Empfangseinheit OE abgestimmt. Typischerweise ist der Querschnitt der Durchgangsöffnung OF und auch der photosensitiven Schicht kreisförmig. Er kann alternativ auch quadratisch oder hexagonal sein. Die Durchgangsöffnung OF kann z.B. mittels einer Bohrung in den Schaltungsträger eingebracht sein. Vorzugsweise beträgt der Durchmesser der Durchgangsöffnung in einem Bereich von wenigen Millimetern, wie z.B. in einem Bereich von 2 bis 5 mm. Besonders vorteilhaft ist es, wenn der Photosensor der optischen Empfangseinheit OE ein Reverse-Gullwing-Gehäuse für eine direkte Oberflächenmontage auf dem Schaltungsträger aufweist. Die "Reverse-Gullwing"-Montage erlaubt hierbei, dass sich die photosensitive Schicht des Photosensors nach der SMD-Montage möglichst nahe am Schaltungsträger befindet

Insbesondere ist die Durchgangsöffnung zugleich eine optische Blende. Sie dient insbesondere zur Verringerung von Streulicht innerhalb des optischen Streulichtsystems der Empfangseinheit OE.

Wie schon erwähnt, kann das beispielhafte Detektionsgerät 100 als Rauchmelder 100, insbesondere als Ansaugrauchmelder, ausgebildet sein wobei das Detektionsgerät 100 eine als Strömungskanal für angesaugte Umgebungsluft ausgebildete Messkammer 2 aufweist. Typischerweise ist an einem solchen Ansaugrauchmelder, auch als ASD (für Aspirated Smoke Detector) bezeichnet, eine Rohrleitung oder ein Rohrsystem mit einer Vielzahl längs der Rohleitung verteilt angeordneten Ansauglöchern angeschlossen, um zumindest einen Teil der Raumluft aus zu überwachenden Räumen anzusaugen.

Somit ist es möglich einen nach dem Streulichtprinzip arbeitenden optischen Rauchmelder mit entsprechender Messkammer 2, geeigneten LEDs 3, 4, geeignetem optischen Detektor OE und einer geeigneten Auswertevorrichtung (Mikrocomputer mit geeigneter Firm- und/oder Software) zur Auswertung der Streusignale als Detektionsgerät 100 zur Feinstaubbestimmung bzw. Feinstaubmessung zu verwenden.

Schliesslich kann das Detektionsgerät 100 als Punktmelder ausgebildet sein, wobei das Gehäuse 1 zumindest eine Raucheintrittsöffnung aufweist und wobei im Gehäuse 1 eine als Labyrinth ausgebildete Messkammer 2 angeordnet ist.

Vorzugsweise (aber nicht zwingend) wird eine Luftprobe mittels eines Aspirators angesaugt und einer Messkammer 2 zugeführt. In dieser befindet sich je ein langwelliger (IR z.b. 950nm) Emitter 4 und ein kurzwelliger (blauer, z.B. 470nm) Emitter 3, welche in etwa im selben Winkel zum Photodetektor (Photosensor) OE angebracht sind. Der Photodetektor hat eine Empfindlichkeitscharakteristik, welche vom Blaubereich bis in den Infrarotbereich geht (sog. "Blue Enhanced"). Beide Emitter 3, 4 werden abwechslungsweise gepulst und das dabei resultierende Streusignal am Partikel in einer Streulichtanordnung mit der Photodiode der optischen Empfangseinheit OE ausgemessen.

Durch Vergleich der Streusignale kann eine Aussage über die Grössenordnung der Partikel gemacht werden (siehe dazu die WO2012/019987A2). Üblicherweise werden dabei die Signale während einer Kalibrierungsphase normiert bezüglich einem Referenzstaub (z. B. Portland Zement). Dabei wird die Skalierung so gemacht, dass der Signalhub für diese Partikel nach der Kalibrierung die gleiche Grösse haben. Wird nun ein deutlich höheres Blausignal als IR Signal gemessen, kann davon ausgegangen werden, dass die Partikel deutlich kleiner als der Referenzstaub sind. Dieses zur Rauchdetektion bekannte Phänomen wird erfindungsgemäss zur Feinstaubdetektion benutzt. Dabei kann über den zeitlichen Verlauf und die Amplitudenhöhe auch zwischen Rauch und Feinstaub diskriminiert werden.

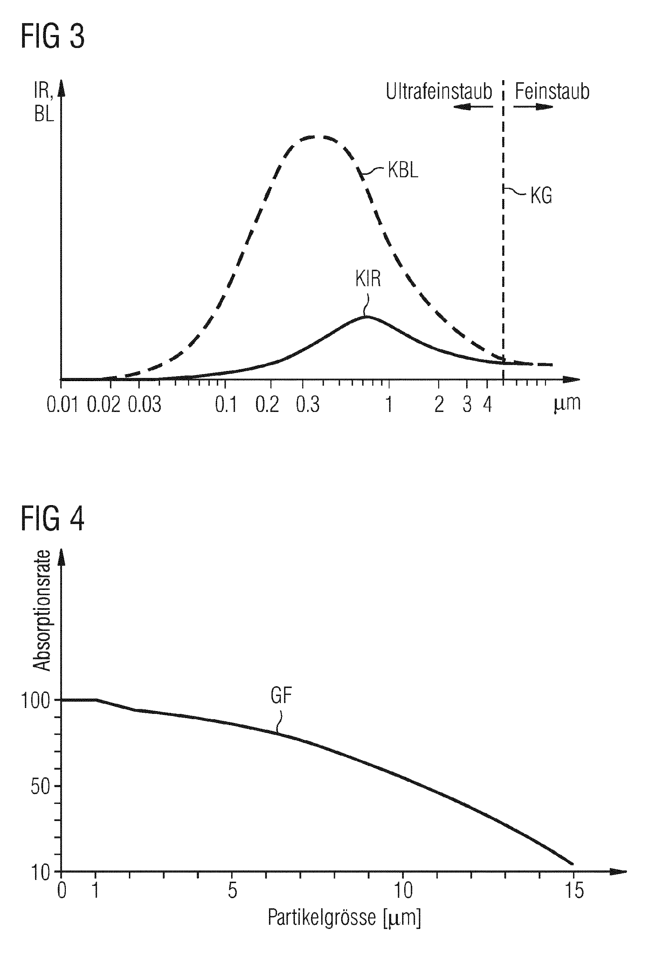

Figur 3 zeigt jeweils den relativen Signalpegel eines Amplitudenverlaufs KBL, KIR von beispielhaft infrarotem IR und blauem Streulicht BL, logarithmisch aufgetragen in µm und mit eingezeichneter durchschnittlicher Partikelgrösse von typischen Feinstaubpartikeln. Die gestrichelte Linie KG zeigt eine beispielhafte Grenze (Kalibriergrenze) auf, bei der die Signale mittels Referenzpartikeln auf den gleichen Signalhub normiert wurden.

Die gestrichelte Linie KG (Kalibriergrenze) ist in Figur 3 bei etwa 5 µm eingetragen, und stellt eine empirische Grenze zwischen Ultrafeinstaub (z.B. PM0.1) und Feinstaub für typisch zu erwartende Partikel dar. Sie kann - je nach zu überwachender Umgebung - auch in anderen Bereichen festgelegt werden. Mit Vorteil liegt die empirische Grenze im jeweiligen Bereich der Klassifikationskriterien für Feinstaub: PM10 (Partikelgrösse < 10 µm), PM2.5 (Partikelgrösse < 2,5 µm), PM0.1 (Partikelgrösse < 0,1 µm).

Mit KIR ist der Amplitudenverlauf des infraroten Streulichtsignals IR mit einer Wellenlange von 940 nm und mit KBL der Amplitudenverlauf des blauen Streulichtsignals BL mit einer Wellenlange von 470 nm bezeichnet. Die beiden Streulichtsignale IR, BL sind in der gezeigten Darstellung bereits in der Weise zueinander normiert, dass deren Amplitudenverlauf für grössere Partikel wie Staub und Dampf in etwa übereinstimmt. Im vorliegenden Beispiel stimmt der Amplitudenverlauf für eine Partikelgrösse von mehr als 3 µm in etwa überein. Wie die Figur 3 zeigt, wird das blaue Licht BL mehr an kleineren Partikeln und das infrarote Licht IR mehr an grösseren Partikeln gestreut.

Die grössenselektive Bestimmung der Konzentration der Feinstaubpartikel erfolgt durch Vergleich der Streulichtsignale IR, BL und optional weiterhin durch eine Analyse des zeitlichen Verlaufs der Streulichtsignale IR, BL. Durch die zeitliche Analyse der Änderung des Signals IR, BL und der Signalstärke kann Rauch von Feinstaub diskriminiert werden. Dabei macht man sich zunutze, dass Feinstaubkonzentrationen typischerweise im Bereich <0.05%/m und langsam ändernd (mehrere Stunden) während Rauch vorwiegend im Bereich ab 1%/m wahrgenommen wird und sich vergleichsweise schnell ändert (<30min).

Die messtechnische Bestimmung der Feinstaubpartikelgrössen in der optischen Messkammer erfolgt auf Basis des Amplitudenverhältnisses aus dem ersten und gegebenenfalls zweiten Streulichtsignal BL, IR. Beispielhafterweise kann das Verhältnis IR:BL gebildet werden. Alternativ kann auch der Kehrwert der beiden Streulichtsignale IR, BL gebildet werden.

Eine weitere Alternative besteht darin, dass die Signale IR, BL als Vektoren in einer x-y Ebene aufgefasst werden. Die Signalverarbeitung AM kann dann durch Analyse der resultierenden Länge des Vektors und des Winkels die Partikelgrösse bestimmen. Siehe dazu die deutsche Patentschrift DE 10 2011 083 939 Al.

Mit Vorteil weisen die Auswertemittel AM Mechanismen zur Bildung eines Amplitudenverhältnisses zwischen den beiden Streulichtsignalen 1R, BL auf, z.B. einen analogen Dividierer oder eine entsprechende Software.

Mit Vorteil sind die beiden Streulichtsignale BL, IR derart zueinander normiert, dass deren Amplitudenverlauf für eine vorgegebene Umwelt-Partikelgrösse, insbesondere Feinstaub-Partikelgrösse, in etwa übereinstimmt. Mit Vorteil entspricht die vorgegebene Umwelt-Partikelgrösse für die Normierung der beiden Streulichtsignale in etwa der jeweiligen Feinstaubpartikelgrössenklasse (PM10, PM2.5, PM0.1).

Es ergibt sich eine hohe Korrelation zwischen Feinstaubbelastung und dem Ausschlag KBL des kurzwelligen Emitters BL. Dies stimmt insbesondere falls der Ausschlag KIR des langwelligen Emitters IR klein bleibt im Verhältnis zum Ausschlag KBL des kurzwelligen Emitters BL. Sind beide Ausschlage KBL, KIR in etwa gleich, kann davon ausgegangen werden, dass besonders viele grosse Partikel (>5µm) angesaugt wurden. Es kann damit eine grobe Klassifizierung zwischen Feinstaub und Grobstaub erreicht werden.

Falls der kurzwellige Emitter BL mit Heptafluorpropan HFC-227 abgeglichen wird, wobei der Signalhub auf 64 Counts normiert wird, so wurde empirisch ermittelt, dass ein µg/m³ pro Count-Wert resultiert.

Die Vergleichsmessungen wurden über einen längeren Messzeitraum mit einer Referenzfeinstaubmessstation in Zug, Schweiz gemacht (siehe Figur 5).

Aus der Kombination eines kurzwelligen Emitters mit einer Photodiode welche im Blau Bereich empfindlich ist, kann die Empfindlichkeit für Partikel < 1µm drastisch gesteigert werden als dies mit einer normalen IR Photodiode der Fall wäre.

Durch die Kombination eines blauen Emitters und einer entsprechend empfindlichen Photodiode kann ein besonders gesundheitsgefährdendes Spektrum der Feinstaubbelastung gemessen werden, nämlich diejenigen Partikel, welche <1 µm sind. Der Grund liegt darin, dass die Streueffizienz der kurzwelligen, blauen LED bei Raleigh Streuung um die vierte Potenz effizienter ist als die der langwelligen, IR LED. Der Peak der Streueffizienz liegt bei der Wellenlänge selbst, also z.B. bei 470nm.

Das empfangene Streusignal gewichtet also per Definition die Teilchen um 500nm am höchsten - dies ist u.a. für die Abschätzung der Toxizität entscheidend.

Durch obig beschriebenes Verfahren kann Ultrafeinstaub von normalem Feinstaub oder Grobstaub unterschieden werden. Entsprechend kann das Detektionsgerät unterschiedliche Funktionen triggern. Z.B. können bei einer Heizung die Parameter anders eingestellt werden wenn der Feinstaubgehalt der Abluft steigt (z.B. automatisch über eine entsprechende Ansteuerung durch die Auswertemittel). Oder es kann ein Alarm an eine Zentrale (Behörde) gegeben werden, wenn die Heizung einen bestimmten Wert über längere Zeit überschreitet. Dies ist vor allem bei der neuen Norm für Holzheizungen relevant.

Ist das Feinstaubmessgerät im Privathaushalt installiert, kann z.B. ein Asthmatiker entscheiden, ob er Sport treiben will. Generell wurde festgestellt, dass sich immer mehr Leute interessieren für die Feinstaubbelastung der Luft.

Ein Spital kann die Feinstaubbelastung der Krankenraume überwachen und gegebenenfalls Alarm schlagen bzw. geeignete Massnahmen ergreifen, sollten gesundheitsgefährdende Werte erreicht werden.

Figur 4 zeigt den Graph einer nach physiologischen Gesichtspunkten erstellte beispielshaften Gewichtungs- bzw. Trennungsfunktion GF die das grössenselektive Absorptionsverhalten von Feinstaubpartikeln in den oberen Atemwegen des menschlichen Körpers nachbildet. Die oberen Atemwege (Mund, Nase) sind entscheidend für die Aufnahme von Feinstaubpartikel im menschlichen Körper. Je weniger Partikel absorbiert, d.h. je mehr Partikel abgeschieden werden können, umso besser. Die Gewichtungsfunktion bzw. Trennfunktion berücksichtigt z.B. dass sehr kleine Partikel zu 100 % (d.h. vollständig) absorbiert werden. Die Absorptionsrate nimmt mit zunehmender Partikelgrösse ab und grosse Partikel (ab 15 µm) werden überhaupt nicht mehr absorbiert, d.h. hier ist die Absorptionsrate Null, denn diese Partikel gelangen nicht in den Körper. Je genauer durch die Gewichtungsfunktion das menschlich physiologische Absorptionsverhalten der oberen Atemwege nachgebildet wird, desto genauer ist die Bestimmung der Gefährlichkeit des vorhandenen Feinstaubs.

Figur 5 zeigt ein Diagramm mit der Darstellung einer beispielhaften Feinstaubmessung des erfindungsgemässen Feinstaubmessgeräts über mehrere Tage im Vergleich (Finedust concentration comparision) zum Messergebnis einer offiziellen Feinstaubmessstation in Zug, CH (PM10 Station Zug). Dabei wurde die Konzentration C von Feinstaubpartikel der Kategorie PM10 gemessen. In der Darstellung gemäss Figur 5 stellt die X-Achse die Zeit t dar und die Y-Achse die Konzentration C der Feinstaubpartikel.

Die Messung erfolgte im Zeitraum (Measurement range) 28. Oktober 2011 bis 03. November 2011 06:00 Uhr.

Die gestrichelte Line zeigt die Konzentration C des Feinstaubs, gemessen durch das blaue Streulicht ("ASD Blue") des ASD-Brandmelders. Die durchgezogene Linie "PM10 Station Zug" stellt die real an der Station gemessene Feinstaubkonzentration für PM10-Partikel dar.

Die in Figur 5 dargestellten Messergebnisse zeigen, dass die vom erfindungsgemässen Detektionsgerät (ASD Blue) gelieferten Messergebnisse mit den realen Messergebnissen einer Feinstaubmessstation (PM10 Station Zug) korrelieren.

Ein nach dem Streulichtprinzip arbeitendes optisches Detektionsgerät zur messtechnischen Bestimmung von Feinstaubpartikeln, wobei das Detektionsgerät auch als Rauchmelder, insbesondere als Ansaugrauchmelder, einsetzbar ist. Somit ist in kompakter Bauweise ein Dual-use Detektionsgerät bereitgestellt, zur Rauchdetektion und zur Feinstaubdetektion. Die kompakte Bauweise ermöglicht die Herstellung des Detektionsgerätes in Form und Abmessungen von handelsüblichen Gefahrenmeldern und somit eine Verwendung insbesondere in Privathaushalten. Z.B. für eine zuverlässige und kostengünstige Überwachung von Holzfeuerungen (Kamin etc.).

### Bezugszeichenliste

- 1: Gehäuse
- 2: Messkammer, Strömungskanal
- 3, 4: Leuchtmittel, LED
- 5, 9: optische Linse
- 7: Lichtfalle
- 8: Blende
- OE: optische Empfangseinheit (Photosensor, Photodiode)
- 100: Detektionsgerät
- OF: Durchgangsöffnung
- AM: Auswertemittel
- IN: Lufteinlass
- OUT: Luftauslass
- OA: optische Achse
- Z: optisches Streuzentrum
- C: Konzentration
- t: Zeit
- KBL, KIR: Amplitudenverlauf
- IR: Infrarotlicht
- BL: Blaues Licht
- GF: Gewichtungsfunktion
- KG: Kalibriergrenze

## Patentansprüche

1. Ein nach dem Streulichtprinzip arbeitendes optisches Detektionsgerät (100) zur messtechnischen Bestimmung von Feinstaubpartikel, wobei das Detektionsgerät (100) umfasst:
- eine gegen Fremdlichteintritt geschützte optische Messkammer (2), wobei die Messkammer (2) ausgestaltet ist, um Umweltluft mit Feinstaubpartikeln aus der Umgebung des Detektionsgerätes aufzunehmen;
- eine erste Lichtquelle (3) zum Aussenden von Licht (BL) in einem ersten Wellenlängenbereich;
- eine für den ersten Wellenlängenbereich sensitive optische Empfangseinheit (OE) zum Empfang des an den Feinstaubpartikeln gestreuten Lichts und zum Umwandeln des empfangenen Lichts (BL) in ein erstes Streulichtsignal (KBL); und
- ein Auswertemittel (AM), welches über den zeitlichen Verlauf und der Amplitudenhöhe des ersten Streulichtsignals (KBL) Störgrössen (z.B. Rauch, Staub) von Feinstaub diskriminiert.

2. Detektionsgerät (100) nach Anspruch 1,
wobei das Detektionsgerätes (100) eine zweite Lichtquelle (4) zum Aussenden von Licht (IR) in einem zweiten Wellenlängenbereich umfasst;
wobei die optische Empfangseinheit (OE) derart ausgestaltet ist, dass sie auch für den zweiten Wellenlängenbereich empfindlich ist und das empfangene Licht (IR) in ein zweites Streulichtsignal (KIR) umwandelt, und
wobei das Auswertemittel (AM) dazu eingerichtet ist, durch Vergleich der Streulichtsignale (KBL, KIR) eine Klassifizierung in eine oder mehrere Feinstaubpartikelgrössenklassen vorzunehmen.

3. Detektionsgerät (100) nach Anspruch 2, wobei die Klassifizierung gemäss einer nach physiologischen Gesichtspunkten bewerteten Gewichtungsfunktion (GF) erfolgt, die das grössenselektive Absorptionsverhalten von Feinstaubpartikeln in den oberen Atemwegen beim menschlichen Körper nachbildet.

4. Detektionsgerät (100) nach Anspruch 2 oder 3, wobei die Gewichtung bzw. die Gewichtungsfunktion (GF) auf einem geeigneten Standard (PM10, PM2.5, PM0.1) oder einer geeigneten Normung basiert.

5. Detektionsgerät (100) nach einem der Ansprüche 2 bis 4, wobei, insbesondere fortlaufend, bestimmte Konzentrationswerte der jeweiligen bewerteten Feinstaubpartikelgrössenklasse (PM10, PM2.5, PM0.1) ausgegeben werden und/oder eine Meldung ausgegeben wird, falls einer der Konzentrationswerte einen jeweiligen Grenzwert überschreitet.

6. Detektionsgerät (100) nach einem der Ansprüche 2 bis 5, wobei die messtechnische Klassifizierung der Feinstaubpartikelgrössen in der optischen Messkammer auf Basis des Amplitudenverhältnisses des ersten und zweiten Streulichtsignals (KBL, KIR) erfolgt.

7. Detektionsgerät (100) nach Anspruch 6, wobei die beiden Streulichtsignale (KBL, KIR) zuvor derart zueinander normiert werden, dass deren Amplitudenverlauf für eine vorgegebene Partikelgrösse, insbesondere Feinstaub-Partikelgrösse, in etwa übereinstimmt.

8. Detektionsgerät (100) nach Anspruch 7, wobei die vorgegebene Partikelgrösse für die Normierung der beiden Streulichtsignale (KBL, KIR) in etwa einer der Feinstaubpartikelgrössenklassen PM10, PM2.5 oder PM0.1 entspricht.

9. Detektionsgerät (100) nach Anspruch 1, wobei die erste Lichtquelle (3) Licht im ersten Wellenlängenbereich von 400 nm bis 500 nm aussendet.

10. Detektionsgerät (100) nach einem der vorherigen Ansprüche 2 bis 9, wobei die erste Lichtquelle (3) Licht im ersten Wellenlängenbereich von 400 nm bis 500 nm, insbesondere mit einer Wellenlänge von 470 nm ± 20 nm aussendet, und wobei die zweite Lichtquelle (4) Licht im zweiten Wellenlängenbereich von 600 nm bis 1000 nm, insbesondere mit einer Wellenlänge von 900 nm ± 60 nm, aussendet.

11. Detektionsgerät (100) nach einem der vorherigen Ansprüche, wobei die erste und zweite Lichtquelle (3, 4) durch eine gemeinsame Lichtquelle ausgebildet sind, geeignet zum Aussenden von Licht (BL, IR) in einem ersten Wellenlängenbereich und in einem zweiten Wellenlängenbereich.

12. Detektionsgerät (100) nach einem der vorherigen Ansprüche, wobei die der Messkammer (2) zugeführte Umweltluft auf darin befindliche Staubpartikel mit einer Partikelgrösse von mehr als 15 µm, insbesondere von mehr als 50 µm, vorgefiltert wird.

13. Detektionsgerät (100) zur messtechnischen Bestimmung von Feinstaubpartikeln nach einem der vorstehenden Ansprüche 1 bis 12 zur Überwachung von kleinen und mittleren Feuerungsanlagen, insbesondere von in Privathaushalten weit verbreiteten Holzfeuerungsanlagen.

14. Detektionsgerät (100) zur messtechnischen Bestimmung von Feinstaubpartikeln nach einem der Ansprüche 1 bis 12 zur Überwachung der Luftqualität in Umweltmessstationen.

15. Detektionsgerätes (100) zur messtechnischen Bestimmung von Feinstaubpartikel nach einem der vorstehenden Ansprüche, wobei das Detektionsgerät (100) auch als Rauchmelder, insbesondere als Ansaugrauchmelder, einsetzbar ist.

16. Verwendung eines kombinierten Rauch-/Feinstaubmelder (100) nach Anspruch 15, wobei in Abhängigkeit der Rauchkonzentration ein Feueralarm und in Abhängigkeit der Feinstaubkonzentration eine Feinstaubwarnung ausgegeben wird.
